# EUROPEAN PATENT SPECIFICATION

(11) **EP 3 804 505 B1**
(45) Date of publication and mention of the grant of the patent: **14.05.2025**
(21) Application number: 19812452.1
(22) Date of filing: 29.05.2019
(51) Int. Cl.: A01G 7/00, A01G 22/15, A01G 22/60

(54) **SOIL AMELIORATION METHOD**
VERFAHREN ZUR BODENVERBESSERUNG
PROCÉDÉ D'AMÉLIORATION DU SOL

(30) Priority: 30.05.2018 JP 2018103058
(43) Date of publication of application: 14.04.2021
(73) Proprietor: AQUASOLUTION Corporation, Tomi-shi Nagano 389-0514 (JP)
(72) Inventor: SATO, Takashi, Tokyo 102-0084 (JP)
(74) Representative: Piotrowicz, Pawel Jan Andrzej
(86) International application number: PCT/JP2019/021247
(87) International publication number: WO 2019/230778

(56) References cited:
- CN-A- 107 125 102
- JP-A- 2006 042 785
- JP-A- 2010 094 117
- JP-A- 2010 179 266
- JP-A- 2013 078 761
- JP-A- 2015 097 509
- JP-A- 2016 042 798
- JP-A- 2018 007 646
- JP-A- 2018 069 193

## Description

### TECHNICAL FIELD

The present invention relates to a method for soil improvement.

### BACKGROUND ART

Nitrogen, phosphoric acid and potassium are called three elements of fertilizer components and are essential to the growth of a plant.

It is known that these fertilizer components are dissolved in water and then absorbed into a plant, and there may be a problem that the fertilizer components are dissolved in water so as to leak out to a region where a plant cannot absorb the fertilizer components.

Addressing such problem, Patent Literature 1, for example, describes a soil improvement method involving application of a soil conditioner in which at least one kind of fermented organic substance as an effective nutrient in the growth of plants is adhered to zeolite to soil that has been mixed with a fertilizer, or application of the soil conditioner together with a fertilizer to soil ([Claim 1] and [Claim 12]).

### CITATION LIST

### PATENT LITERATURES

Patent Literature 1: JP 2005-075848 A
JP 2018 069193 A discloses a method for producing mineral water comprises a step of pulverizing vermiculite; a step of mixing the pulverized vermiculite with a concentrated sulfuric acid; a step of diluting a mixture of the vermiculite and the concentrated sulfuric acid; a step of separating the diluted mixture into a filtrate and a dehydrated cake; and a step of mixing micro bubbles into the filtrate.
JP 2015 097509 A discloses a plant cultivation method comprises a) a step of performing treatment of releasing superfine air bubbles in water or aqueous solution, b) a step of adding fertilizer or nutrient to the water or aqueous solution before, during or after the treatment, and c) a step of making a plant absorb the water or aqueous solution comprising the fertilizer or nutrient and the superfine air bubbles.
CN 107 125 102 A discloses a method of irrigating a crop, wherein part of the water is mixed in a gas-liquid mixing pump so that it contains micro-nano bubbles.
JP 2016 042798 A discloses a sprout cultivation method that uses ozone nanobubble water and ethylene nanobubble water in combination, and a sprouts cultivation system comprising an ozone nanobubble water supply device and an ethylene nanobubble water supply device.

### SUMMARY OF INVENTION

### TECHNICAL PROBLEMS

The present inventor has studied the soil improvement method described in Patent Literature 1 and discovered that an operation to have the fermented organic substance adhered to zeolite is complicated.

Accordingly, an object of the present invention is to provide a method for soil improvement capable of improving soil with a simple operation.

### SOLUTION TO PROBLEMS

The present inventor has conducted an intensive study to attain the above-described object and found that application of nanobubble water to soil improves the soil, whereby the present invention has been completed.

That is, the present inventor found that the above-described object can be attained by the following constitution.

[1] A method for soil improvement, the method comprising applying nanobubble water to soil. Bubbles contained in the nanobubble water include at least one type of gas selected from the group consisting of oxygen, nitrogen, carbon dioxide and ozone. The nanobubble water contains bubbles in an amount of from 1 x 10⁸ to 1 x 10¹⁰ bubbles/mL. The soil is soil used in soil culture or nutrient-solution soil culture of a plant.
[2] The method for soil improvement according to [1], wherein sprinkling is carried out using the nanobubble water.
[3] The method for soil improvement according to [1] or [2], wherein the nanobubble water contains bubbles with a modal particle size of from 10 to 500 nm.
[4] The method for soil improvement according to [6], wherein the plant is selected from flowers and ornamental plants or from stem and leaf vegetables.
[5] The method for soil improvement according to [6] or [7], wherein the plant is an alstroemeria plant or komatsuna.

### ADVANTAGEOUS EFFECTS OF INVENTION

The present invention can provide a method for soil improvement capable of improving soil with a simple operation.

### BRIEF DESCRIPTION OF DRAWINGS

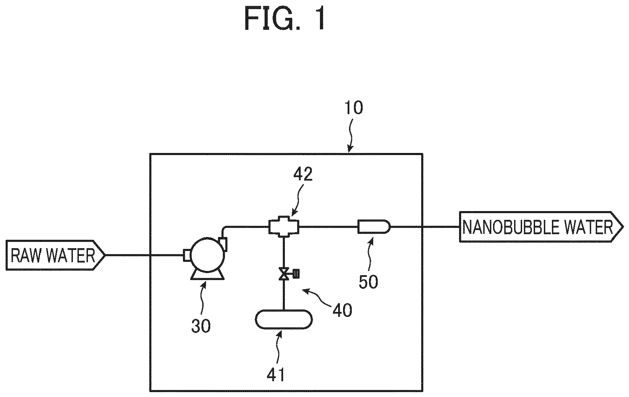

[FIG. 1] FIG. 1 is a schematic view showing an example of a nanobubble generating apparatus.

### DESCRIPTION OF EMBODIMENTS

The present invention is described below in detail.

While the constitutional requirements may be described below based on a typical embodiment of the present invention, the present invention is not limited to the embodiment.

In the description, a numerical range indicated using the form of "(from)... to..." should read as a range including the former number as the lower limit value and the latter number as the upper limit value.

The method for soil improvement of the present invention (hereinafter also simply referred to as "soil improvement method of the invention") is a method for soil improvement where nanobubble water is applied to soil.

According to the present invention, as described above, soil improvement can be achieved by applying nanobubble water to soil.

The reason thereof is not precisely clarified, but the present inventor has the following presumption.

That is, Experiment 1 in EXAMPLES described later shows that soil is improved with an amount of available nitrate nitrogen being increased in a test area where nanobubble water is applied, as compared to a customary area where well water is applied to soil, and besides, an additional fertilizer is applied.

It is presumed that the foregoing improvement is achieved because the action or the number of microorganisms in soil is increased due to nanobubble water, and transformation of the base fertilizer into an available form is promoted.

Nanobubble water and optional components used in the soil improvement method of the invention will be described below in detail.

### [Nanobubble water]

Nanobubble water used in the soil improvement method of the invention is water which contains bubbles having a diameter of less than 1 µm and into which the bubbles are incorporated. The expression "water into which the bubbles are incorporated" intends to exclude water containing the bubbles that are inevitably contained due to, for example, water (such as well water containing impurities) used to generate nanobubble water.

The diameter (particle size) of bubbles contained in nanobubble water, as well as the modal particle size of bubbles and the number of bubbles to be described later are the values that are measured using the nanoparticle tracking analysis of the Brownian motion-moving speed of bubbles in water. In the present description, numeral values measured by the nanoparticle analysis system, NanoSight series (manufactured by NanoSight Ltd.) are used.

The nanoparticle analysis system, NanoSight series (manufactured by NanoSight Ltd.) can measure the Brownian motion speed of particles and calculate the diameter (particle size) based on the measured speed. The modal particle size can be determined as the mode diameter from the particle size distribution of the existing nanoparticles.

In the present invention, the modal particle size of bubbles contained in the nanobubble water is preferably from 10 to 500 nm, more preferably from 30 to 300 nm, and even more preferably from 70 to 130 nm, because soil can be further improved.

Gas constituting bubbles contained in the nanobubble water is not particularly limited but is preferably gas other than hydrogen from the view point of a longtime existence in water. Specific examples of the gas include air, oxygen, nitrogen, fluorine, carbon dioxide and ozone.

Among these, it is preferable to contain at least one type of gas selected from the group consisting of oxygen, nitrogen, carbon dioxide and ozone because soil is further improved. In particular, it is more preferable to contain oxygen because the bubbles can exist for a longer period of time.

Here, "containing oxygen" means to contain oxygen at a higher concentration than the oxygen concentration in air. The same applies to nitrogen and carbon dioxide. The oxygen concentration is preferably not less than 30 vol% of the bubbles, and preferably more than 50 vol% and not more than 100 vol%.

The nanobubble water contains bubbles in an amount of preferably from 1 x 10⁸ to 1 x 10¹⁰ bubbles/mL because soil is further improved, more preferably more than 1 x 10⁸ bubbles/mL and less than 1 x 10¹⁰ bubbles/mL because the bubble generation time and the bubble existence are particularly well balanced, and even more preferably from 5 x 10⁸ to 5 x 10⁹ bubbles/mL because soil is further more improved.

Exemplary methods of generating the nanobubble water include a static mixer method, a venturi method, a cavitation method, a vapor condensation method, an ultrasonic method, a swirling flow method, a pressurized dissolution method and a fine pore method.

The soil improvement method of the invention may include a generation step of generating the nanobubble water prior to application of the nanobubble water. That is, the soil improvement method of the invention may be a controlling method including, for example, a generation step of introducing water from a water source such as a water storage tank, a well or agricultural water into a nanobubble generating apparatus to generate nanobubble water, and an application step of applying the generated nanobubble water. Exemplary techniques of introducing water from a water source into a nanobubble generating apparatus include a technique in which water is drawn from a water source using a tub, a pump or another device and supplied to the nanobubble generating apparatus, and a technique in which water is directly supplying to a nanobubble generating apparatus from a flow path that is installed between a water source and the nanobubble generating apparatus and connected to the nanobubble generating apparatus.

As the method of generating the nanobubble water, a generation method using an apparatus that does not intentionally generate a radical is preferred, and a specific example thereof is a generation method using, for instance, the nanobubble generating apparatus described in paragraphs [0080] to [0100] of JP2018-15715 A. The foregoing is incorporated in the present description.

Another example of the nanobubble generating apparatus that does not intentionally generate a radical is an ultrafine bubble generating apparatus including a liquid discharger that discharges water, a gas incorporating device that pressurizes gas and incorporates the gas into the water discharged from the liquid discharger, and an ultrafine bubble generator that allows the water having the gas incorporated therein to pass through an inside of the ultrafine bubble generator to generate ultrafine bubbles in the water, wherein, between the liquid discharger and the ultrafine bubble generator, the gas incorporating device pressurizes gas and incorporates the gas into a liquid being in a pressurized state flowing toward the ultrafine bubble generator. Specifically, a generation method using a nanobubble generating apparatus shown in FIG. 1 is exemplified.

A nanobubble generating apparatus 10 shown in FIG. 1 includes therein a liquid discharger 30, a gas incorporating device 40 and a nanobubble generating nozzle 50.

The liquid discharger 30 comprising a pump draws raw water of nanobubble water (e.g., well water) therein and discharges the raw water. The gas incorporating device 40 includes a vessel 41, in which pressurized gas is enclosed, and a substantially cylindrical gas incorporating device body 42. While allowing the water discharged from the liquid discharger 30 to flow inside the gas incorporating device body 42, the gas incorporating device 40 introduces the pressurized gas of the vessel 41 into the gas incorporating device body 42. In this manner, gas-incorporated water is generated in the gas incorporating device body 42.

The nanobubble generating nozzle 50 is to generate nanobubbles in the gas-incorporated water according to the principle of pressurized dissolution when the gas-incorporated water passes through an inside of the nanobubble generating nozzle 50, and the structure thereof may be the same as the structure of the nanobubble generating nozzle described in JP2018-15715 A. Nanobubble water generated in the nanobubble generating nozzle 50 is ejected from a tip end of the nanobubble generating nozzle 50, then flows out the nanobubble generating apparatus 10, and is delivered to a predetermined destination via a flow path that is not shown.

As described above, between the liquid discharger 30 and the nanobubble generating nozzle 50 in the nanobubble generating apparatus 10, the gas incorporating device 40 introduces pressurized gas into water (raw water) being in a pressurized state flowing toward the nanobubble generating nozzle 50. In this manner, defects such as cavitation that may occur when gas is incorporated into water on the intake side (suction side) of the liquid discharger 30 can be avoided. Since gas is incorporated into water as being in a pressurized (compressed) state, gas can be incorporated into water against the water pressure at the gas incorporation location. Accordingly, gas can be appropriately incorporated into water without particularly generating a negative pressure at the gas incorporation location.

In addition, the liquid discharger 30 is connected on the suction side thereof with the flow path of water supplied from a water source such as a well or a water tap, and the pressure of the water flowing from the upstream side of the liquid discharger 30 into the liquid discharger 30 in the flow path (i.e., the water pressure on the suction side) is preferably a positive pressure. When this is the case, the above-described constitution is more effective. More specifically, when the water pressure (the suction pressure) on the upstream side of the liquid discharger 30 is a positive pressure, gas is incorporated into water on the downstream side of the liquid discharger 30; the constitution of the nanobubble generating apparatus 10 capable of appropriately incorporating gas into water also on the downstream side of the liquid discharger 30 becomes more significant.

Further, water used to generate the nanobubble water is not particularly limited, and use can be made of, for example, rainwater, tap water, well water, agricultural water and distilled water.

Such water may be water that has been subjected to another treatment before being used to generate nanobubble water. Another treatment may be exemplified by pH adjustment, precipitation, filtration, or disinfection (sterilization). In particular, when agricultural water is used, for instance, agricultural water that has been typically subjected to at least one of precipitation and filtration may be used.

In the present invention, a mode of applying the nanobubble water to soil varies depending on the plant cultivation method using the soil and thus is not particularly limited, and examples thereof include a mode where the nanobubble water is sprinkled over soil in the soil culture, a mode where soil is supplied with a culture liquid diluted with the nanobubble water in the nutrient-solution soil culture (irrigation and fertilization culture), and a mode where the nanobubble water alone is sprinkled over soil (applied through irrigation) in the nutrient-solution soil culture.

Among these, the mode where the nanobubble water is sprinkled is preferred because the soil improvement can be achieved through the simpler operation.

Here, the method of "sprinkling water" as one of the application modes is not particularly limited, and when the culture method is the soil culture, for example, a method involving spraying water over an entire of a plant, a method involving spraying water over a part of a plant (e.g., stems or leaves), and a method involving spraying water over soil in which a plant is planted may be adopted. When the culture method is the nutrient-solution soil culture, the water sprinkling may be carried out through irrigation as described above.

### <Additional component>

The nanobubble water may further contain an additional component.

Examples of the additional components include an agrochemical, a fertilizer, a surfactant, an antifreezing agent, a defoaming agent, a preservative, an antioxidant and a thickening agent. The type and an amount of an additional component are not particularly limited and may be selected depending on the intended purpose.

Meanwhile, in the present invention, it is preferable that the additional component contains substantially no radical in the nanobubble water. "Containing substantially no radical" does not mean to exclude a case where a radical is inevitably contained due to water (e.g., well water containing impurities) used to generate the nanobubble water but means to exclude a case where a radical is generated and added through a certain operation.

### [Soil/plant]

The soil improvement method of the invention is preferably applied to soil that is used in the soil culture or the nutrient-solution soil culture of a plant.

The plant is not particularly limited and is preferably a plant that is artificially fed with a fertilizer for cultivation.

Examples of the plant include flowers and ornamental plants such as rose, alstroemeria, cyclamen, tulip, antirrhinum, dahlia, *Chrysanthemum morifolium,* gerbera and orchid;
fruit vegetables such as solanaceous plants (for example, eggplant, pepino, tomato (including grape tomato), tamarillo, *Capsicum annum,* shishito pepper, habanero, bell pepper, paprika and colored bell pepper), araliaceous plants (for example, *Gamblea innovans),* cucurbitaceous plants (for example, pumpkin, zucchini, cucumber, *Cucumis metuliferus, Cucumis melo var. conomon, Momordica charantia, Benincasa hispida,* chayote, *Luffa cylindrica,* calabash, watermelon, melon and *Cucumis melo var.* makuwa), malvaceae plants (for example, okra), and rosaceous plants (for example, strawberry);
stem and leaf vegetables such as cabbage, onion, green onion, Chinese cabbage, spinach, lettuce, broccoli, komatsuna (*Brassica rapa var.*), *Allium tuberosum,* asparagus, celery, garland chrysanthemum, cauliflower, garlic and *Allium chinense;*
root vegetables such as Japanese radish, carrot, burdock, turnip and lotus root; and
fruit trees such as citrus unshiu, apple, peach, nashi pear (*Pyrus pyrifolia*), pear, banana, grape, cherry, oleaster, rubus, blueberry, raspberry, blackberry, mulberry, loquat, fig, persimmon, *Akebia quinata,* mango, avocado, jujube, pomegranate, passion fruit, pineapple, banana, papaya, apricot, *Prunus mume,* plum, peach, kiwifruit, *Pseudocydonia sinensis, Myrica rubra,* chestnut, miracle fruit, guava, star fruit and acerola.

Among these, flowers and ornamental plants and stem and leaf vegetables are preferred, and alstroemeria plants and komatsuna are more preferred, because the soil improvement method of the invention exhibits the higher efficiency.

### EXAMPLES

The present invention is described below more specifically by way of examples. The materials, amounts of use, ratios, treatments and treatment procedures illustrated in the examples below may be modified. The invention is defined by the appended claims.

### [Experiment 1]

### <Details of Experiment 1>

The experiment was carried out in greenhouses for alstroemeria cultivation in Mobara-shi, Chiba, with the following separated areas.

Test area: In a greenhouse where 300 alstroemeria plants (variety: Caryo-hybrid) were planted in June to July, 2017, the nanobubble water generated by the method described below was used and sprinkled over soil as well as stems and leaves by hand from the planting till the end of January, 2018. In the test area, the plants were cultivated with the base fertilizer as shown in Table 1 below, without additional fertilization.

Customary area: In another greenhouse where 300 Alstroemeria plants (variety: Caryo-hybrid) were planted in June to July, 2017, well water was used and sprinkled over soil as well as stems and leaves by hand from the planting till the end of January, 2018, and nanobubble water was not used. In the customary area, the plants were cultivated with the base fertilizer as shown in Table 1 below and an additional fertilizer [nitrogen:phosphoric acid:potassium=6:3:3 (mass ratio)] in an amount of 20g per 8 plants fed on October 14, 2017 and on January 5, 2018.

According to a normal method, the frequency of sprinkling and the sprinkling amount were appropriately varied depending on the growth of alstroemeria, the weather and other factors, and were controlled to be generally same in the test area and the customary area.

### <Nanobubble water generation method>

Nanobubble water was generated using a nanobubble generating apparatus [100V, 10 L/min type; manufactured by Kakuichi Co., Ltd., Aqua Solution Division (currently Aqua Solutions Corporation)] where bubbles (nanobubbles) were generated in water by the pressurized dissolution.

Water used to generate nanobubble water was well water, and the gas used to form the bubbles was oxygen (industrial oxygen, oxygen concentration: 99.5 vol%).

Nanobubbles were generated using the foregoing nanobubble generating apparatus under the conditions with which the analysis by the nanoparticle analysis system, NanoSight LM10 (manufactured by NanoSight Ltd.) would have the following results.
* Number of bubbles per 1 mL of water: 5 x 10⁸ bubbles/mL
* Modal particle size of bubbles: 100 nm

### <Evaluation of soil improvement>

In the test area and the customary area, amounts of available nitrate nitrogen, phosphoric acid and calcium in soil at the time of planting, soil as of October 7, 2017, soil as of November 18, 2017, soil as of December 23, 2017 and soil as of January 27, 2018 were measured using Dr Soil (soil nourishment detector) according to the following procedure. The results are shown in Table 1 below.

### (Measurement procedure)

(1) Part of soil is collected, and acetic acid is added to the collected soil.
(2) Filtration is carried out using filter paper to recover an extraction liquid extracted with acetic acid from soil.
(3) A reagent for each component is added to the recovered extraction liquid.
(4) An amount of each component is measured based on the color using an absorptiometer.

**[Table 1]**

| Table 1 | Jun-Jul, 2017 Base fertilizer at planting | Oct. 7, 2017 | | Nov. 18, 2017 | | Dec. 23, 2017 | | Jan. 27, 2018 | |
|---|---|---|---|---|---|---|---|---|---|
| | | Test area | Customary area | Test area | Customary area | Test area | Customary area | Test area | Customary area |
| Available nitrate nitrogen (mg/100cc) | 40 | 50 | 5 | 50 | 38 | 50 | 19 | 50 | 40 |
| Phosphoric acid (mg/100cc) | 130 | 100 | 80 | 100 | 90 | 88 | 90 | 58 | 67 |
| Potassium (mg/100cc) | 65 | 60 | 60 | 61 | 60 | 56 | 58 | 56 | 60 |

The results shown in Table 1 reveal that in the test area, an amount of available nitrate nitrogen increased in every soil collected on October 7, 2017, November 18, 2017, December 23, 2017 and January 27, 2018, compared to the base fertilization at the time of planting, and hence the soil was improved. Taking into consideration that an additional fertilizer was fed on October 14, 2017 and January 5, 2018 in the customary area, the foregoing improvement can be regarded as an unexpected effect, and the reason thereof is perhaps because application of nanobubble water led ammonia nitrogen included in the base fertilizer in soil to transformation into nitrate nitrogen.

Turning to phosphoric acid and calcium, amounts thereof in the test area where no additional fertilizer was fed were kept at the same level as their amounts in the customary area where an additional fertilizer was fed, and thus it was revealed that the soil in the test area was improved.

### [Experiment 2]

### <Details of Experiment 2>

The experiment was carried out in an agricultural field of komatsuna cultivation in Komoro-shi, Nagano from August 29, 2018 (seeding) to October 8, 2018 (harvesting), with the following separated areas. The respective test areas were made in the same plastic house.

Test area 2-1: In the plastic house culture, agricultural water was used for sprinkling once in two days, and nanobubble water was not used.

Test area 2-2: In the plastic house culture, nanobubble water in which the number of bubbles per 1 mL of water was adjusted to 2 x 10⁸ bubbles/mL was used for sprinkling once in two days.

Test area 2-3: In the plastic house culture, nanobubble water in which the number of bubbles per 1 mL of water was adjusted to 5 x 10⁸ bubbles/mL was used for sprinkling once in two days.

In each of the test areas, komatsuna were seeded in two pots placed in the plastic house and cultivated.

According to a normal method, the sprinkling amount was appropriately varied depending on the growth of komatsuna, the weather or other factors and was controlled to be generally same in the three test areas.

In addition, in Experiment 2, application of agrochemicals was purposely omitted in order to verify the superiority associated with the number of bubbles in 1 mL of nanobubble water.

### <Nanobubble water generation method>

Nanobubble water was generated using a nanobubble generating apparatus (100V, 10 L/min type; manufactured by Aqua Solutions Corporation) where bubbles (nanobubbles) were generated in water by the pressurized dissolution. Water used to generate nanobubble water was agricultural water, and the gas used to form the bubbles was oxygen (industrial oxygen, oxygen concentration: 99 vol%).

Among the conditions for generating nanobubbles using the foregoing nanobubble generating apparatus, the bubble size (modal particle size) was set to be 100 nm.

The number of bubbles per 1 mL of nanobubble water was 2 x 10⁸ bubbles/mL in the test area 2-2 and was 5 x 10⁸ bubbles/mL in the test area 2-3 as described above. The number of bubbles per 1 mL of nanobubble water can be adjusted by, for example, providing a nanobubble water storage tank on the downstream side of the nanobubble generating apparatus, sending nanobubble water of the storage tank back to the nanobubble generating apparatus to allow the nanobubble water to circulate in the system, and varying the circulation time.

### <Evaluation of soil improvement>

In the test areas 2-1 to 2-3, amounts of available nitrate nitrogen, phosphoric acid and potassium in soil at the time of seeding (August 29, 2018) and soil at the time of harvesting (October 8, 2018) were measured according to the same procedure as that in Experiment 1 described above. The results are shown in Table 2 below.

Komatsuna thus cultivated did not show a certain difference in the degree of growth among the test areas. Accordingly, the measurement values at the time of harvesting shown in Table 2 can be regarded as being not affected by the fertilizer absorbency of komtasuna cultivated in the respective test areas.

**[Table 2]**

| Table 2 | At seeding | At harvesting | | |
|---|---|---|---|---|
| | | Test area 2-1 | Test area 2-2 | Test area 2-3 |
| Available nitrate nitrogen (mg/100cc) | 35.0 | 0.1 | 2.2 | 3.5 |
| Phosphoric acid (mg/100cc) | 2.2 | 3.8 | 4.8 | 5.2 |
| Potassium (mg/100cc) | 572.0 | 448.0 | 480.0 | 607.0 |

The results shown in Table 2 reveal that, compared to the test area 2-1 where nanobubble water was not applied to soil, in the test area 2-2 and the test area 2-3 where nanobubble water was applied to soil, amounts of available nitrate nitrogen, phosphoric acid and potassium all increased, and the soil was improved.

More specifically, as compared with, not only the test area 2-2 where the number of bubbles in 1 mL of nanobubble water was 2 x 10⁸ bubbles/mL, but also the time of seeding, an amount of potassium in soil increased in the test area 2-3 where the number of bubbles in 1 mL of nanobubble water was 5 x 10⁸ bubbles/mL, revealing that the soil was further improved.

As describe above, the results of Experiment 1 and Experiment 2 clearly show the soil improvement effect owing to the nanobubble water.

### REFERENCE SIGNS LIST

- 10: nanobubble generating apparatus
- 30: liquid discharger
- 40: gas incorporating device
- 41: vessel
- 42: gas incorporating device body
- 50: nanobubble generating nozzle

## Claims

1. A method for soil improvement, the method comprising applying nanobubble water to soil,
wherein bubbles contained in the nanobubble water include at least one type of gas selected from the group consisting of oxygen, nitrogen, carbon dioxide and ozone,
wherein the nanobubble water contains bubbles in an amount of from 1 x 10⁸ to 1 x 10¹⁰ bubbles/mL, and
wherein the soil is soil used in soil culture or nutrient-solution soil culture of a plant.

2. The method for soil improvement according to claim 1,
wherein sprinkling is carried out using the nanobubble water.

3. The method for soil improvement according to claim 1 or 2, wherein the nanobubble water contains bubbles with a modal particle size of from 10 to 500 nm.

4. The method for soil improvement according to any one of claims 1 to 3, wherein the plant is selected from flowers and ornamental plants or from stem and leaf vegetables.

5. The method for soil improvement according to any one of claims 1 to 4, wherein the plant is an alstroemeria plant or komatsuna.

## Patentansprüche

1. Verfahren zur Bodenverbesserung, wobei das Verfahren das Aufbringen von Nanoblasenwasser auf den Boden umfasst, wobei in dem Nanoblasenwasser enthaltene Blasen mindestens eine Art von Gas beinhalten, das aus der Gruppe ausgewählt ist, die aus Sauerstoff, Stickstoff, Kohlendioxid und Ozon besteht, wobei das Nanoblasenwasser Blasen in einer Menge von 1 x 10⁸ bis 1 x 10¹⁰ Blasen/ml enthält und wobei der Boden Boden ist, der in einer Bodenkultur oder Nährstofflösungsbodenkultur einer Pflanze verwendet wird.

2. Verfahren zur Bodenverbesserung nach Anspruch 1, wobei das Besprengen unter Verwendung des Nanoblasenwassers durchgeführt wird.

3. Verfahren zur Bodenverbesserung nach Anspruch 1 oder 2, wobei das Nanoblasenwasser Blasen mit einer modalen Partikelgröße von 10 bis 500 nm enthält.

4. Verfahren zur Bodenverbesserung nach einem der Ansprüche 1 bis 3, wobei die Pflanze aus Blumen und Zierpflanzen oder aus Stängel- und Blattgemüse ausgewählt ist.

5. Verfahren zur Bodenverbesserung nach einem der Ansprüche 1 bis 4, wobei die Pflanze eine Alstroemeria-Pflanze oder Komatsuna ist.

## Revendications

1. Procédé d'amélioration du sol, le procédé comprenant l'application d'eau à nanobulles au sol,
dans lequel des bulles contenues dans l'eau à nanobulles comprennent au moins un type de gaz choisi dans le groupe constitué par l'oxygène, l'azote, le dioxyde de carbone et l'ozone,
dans lequel l'eau à nanobulles contient des bulles en une quantité de 1 × 10⁸ à 1 × 10¹⁰ bulles/mL, et
dans lequel le sol est un sol utilisé dans la culture du sol ou la culture du sol en solution nutritive d'une plante.

2. Procédé d'amélioration du sol selon la revendication 1, dans lequel une aspersion est réalisée à l'aide de l'eau à nanobulles.

3. Procédé d'amélioration du sol selon la revendication 1 ou 2, dans lequel l'eau à nanobulles contient des bulles d'une taille particulaire modale de 10 à 500 nm.

4. Procédé d'amélioration du sol selon l'une quelconque des revendications 1 à 3, dans lequel la plante est choisie parmi des fleurs et des plantes ornementales ou parmi des légumes-tiges et des légumes-feuilles.

5. Procédé d'amélioration du sol selon l'une quelconque des revendications 1 à 4, dans lequel la plante est une plante alstroemeria ou komatsuna.
